# EUROPÄISCHE PATENTSCHRIFT

(11) **EP 0 548 461 B1**
(45) Veröffentlichungstag und Bekanntmachung des Hinweises auf die Patenterteilung: **20.09.1995**
(21) Anmeldenummer: 92112911.0
(22) Anmeldetag: 29.07.1992
(51) Int. Cl.: B60R 21/13

(54) **Überrollvorrichtung**
Rollbar device
Dispositif d'arceau de sécurité

(30) Priorität: 21.12.1991 DE 9115962 U
(43) Veröffentlichungstag der Anmeldung: 30.06.1993
(73) Patentinhaber: Winfried Matter GmbH, D-76676 Graben-Neudorf (DE)
(72) Erfinder: Matter, Winfried, W-7523 Graben-Neudorf (DE)
(74) Vertreter: Lemcke, Rupert, Dipl.-Ing.

(56) Entgegenhaltungen:
- EP-A- 0 151 332
- FR-A- 2 076 402
- MACHINE DESIGN Bd. 44, Nr. 23, 21. September 1972, Seite 37 'module isultraquiet and supersafe'
- AUTOMOTIVE ENGINEER Bd. 14, Nr. 4, August 1989, GB Seite 53 BURY ST EDMUNDS'side impact protection'

## Beschreibung

Die Erfindung betrifft eine Überrollvorrichtung für Personenkraftfahrzeuge mit wenigstens einem Vordersitz, mit einem Hauptrahmen, der aus zwei im Bereich der den Rücklehnen der Vordersitze naheliegenden Türsäulen zugeordneten und fest mit der Fahrzeugkarosserie verbundenen vertikalen Stützen und einer diese unter dem Fahrzeugdach verbindenden Querstrebe besteht, und mit an den vertikalen Stützen des Hauptrahmens in deren unterem Bereich befestigten, parallel zur Fahrtrichtung nach vorne verlaufenden Längsstreben, die vor dem Bereich der Vordersitze enden.

Ganz allgemein werden unter Überrollvorrichtungen die Fahrzeugkarosserie verstärkende Strukturen verstanden, die so konzipiert sind, daß bei einer Kollision oder einem Überschlag die Verformung der Fahrzeugkarosserie vermieden bzw. verringert wird, so daß sich die Verletzungsgefahr für im Fahrzeug befindliche Personen verringert.

Im Motorsport werden hierzu Überrollvorrichtungen unterschiedlicher Komplexität in die Fahrzeuge eingebaut. Hier ist es beispielsweise üblich, einen Überrollkäfig einzubauen, der zum einen einen Hauptrahmen aufweist, der in einer senkrechten Ebene quer zur Längsachse des Fahrzeugs in der Nähe der Lehne der Vordersitze verläuft, und außerdem einen vorderen Rahmen, der mit dem Hauptrahmen im wesentlichen identisch ist, aber den Konturen der Windschutzscheiben-Holme und des Daches folgt. Um solche Überrollkäfige zu versteifen, werden gelegentlich Längsstreben eingebaut, die zwischen den vertikalen Stützen des Hauptrahmens und des vorderen Rahmens verlaufen.

Diese Streben dienen dabei im wesentlichen dazu, Verformungskräfte abzufangen, die in Längsrichtung auf das Fahrzeug wirken.

Von daher sind solche Überrollvorrichtungen zwar als Schutz bei Auffahrunfällen oder bei Überschlägen geeignet, wie sie im Motorsport häufiger auftreten, aber sie helfen wenig bei seitlichen Kollisionen, die im normalen Straßenverkehr häufiger vorkommen. Hierbei sind insbesondere Polizei-, Notarzt-, Feuerwehr- und Behörden-Vorausfahrzeuge gefährdet, die trotz Ihrer Signalvorrichtungen beim Kreuzen von in Querrichtung befahrenen Straßen in seitliche Kollisionen verwickelt werden.

Bei solchen, nicht für den Motorsport ausgelegten Fahrzeugen würde eine Überrollvorrichtung der oben beschriebenen Art zwar eine gewisse Verbesserung der passiven Sicherheit bedeuten, aber gerade bei Seitenkollisionen ist sie nicht sehr wirkungsvoll, da bei der Ableitung von seitlichen Kräften über die vertikalen Stützen des vorderen Rahmens diese nach innen abknicken können und so die gewünschte Widerstandsfähigkeit bei Seitenkollisionen nicht gewährleisten.

Außerdem bedeutet eine solche Überrollvorrichtung eine nicht unerhebliche Einschränkung des Komforts, da insbesondere der vordere Rahmen die Bedienbarkeit verschiedener Fahrzeugelemente erheblich verschlechtert. So kann die Bedienbarkeit von Fensterkurbel und Haubenentriegelung sowie das Öffnen des Handschuhfaches behindert werden, und die unter dem Dach verlaufende Querstrebe ist hinderlich bei der Benutzung der Sonnenblende oder von im Bereich des Innenrückspiegels angebrachten Leuchten, Uhren etc.

Hiervon ausgehend liegt der vorliegenden Erfindung die Aufgabe zugrunde, eine Überrollvorrichtung für Personenkraftfahrzeuge anzugeben, bei der die Insassen bei Seitenkollisionen sicher geschützt werden, ohne daß durch diese Vorrichtung im Fahrzeug befindliche Bedien- und Ausstattungselemente in ihrem Gebrauch eingeschränkt werden.

Die Aufgabe wird erfindungsgemäß dadurch gelöst, daß die Längsstreben in dem vor dem Bereich der Vordersitze liegenden Abschnitt mit einem Ende einer quer zur Fahrzeuglängsachse und zur Mittelebene des Fahrzeugs hinlaufenden Verbindungsstrebe verbunden sind.

Der Vorteil des Gegenstandes der Erfindung liegt darin, daß durch diese Verbindungsstrebe seitlich auf die Überrollvorrichtung wirkende Kräfte im wesentlichen geradlinig abgebaut werden können. Obwohl also auf einen vorderen Rahmen der oben beschriebenen Art verzichtet werden kann, wird die Sicherheit, die die Überrollvorrichtung bietet, erhöht, wobei gleichzeitig die oben erwähnten Einbußen bezüglich der Bedien- und Einbauelemente entfallen.

Damit die für die Sicherheit relevante ungehinderte Bedienbarkeit der Pedale gewährleistet bleibt, ist es dabei günstig, die Verbindungsstrebe so nah wie möglich an der Vorderseite der Vordersitze anzuordnen. Um dadurch aber nicht gleichzeitig die Einstellbarkeit des Vordersitzes einzuschränken, kann die Verbindungsstrebe insbesondere an der vorderen Grenze des Längsverstellbarkeitsbereiches der Vordersitze entlanglaufen.

Die Stabilität der Überrollvorrichtung kann auf vorteilhafte Weise erhöht werden, indem die Längsstreben nach vorne bis zu den inneren Radhäusern oder den vorderen Federbeindomen verlaufen und dort mit der Fahrzeugkarosserie verbunden sind. Neben einem verbesserten Schutz bei Seitenkollisionen verbessern die Längsstreben damit auch die Verformungsfestigkeit der Fahrgastzelle bei einem Frontalzusammenstoß erheblich.

Dabei ist die Widerstandsfähigkeit bei Seitenkollision insbesondere dann sehr gut, wenn die Verbindungsstrebe, die mit ihrem einen Ende an der Längsstrebe angreift, an ihrem anderen Ende fest mit dem entlang der Fahrzeugmitte
verlaufenden Kardantunnel verbunden ist.

Es ist aber auch denkbar, die Verbindungsstrebe an ihrem anderen Ende mit der auf der gegenüberliegenden Fahrzeugseite liegenden Längsstrebe zu verbinden.

Um jeweils den Bewegungsbereich von Fahrer und Beifahrer so wenig wie möglich einzuschränken, ist es dabei vorteilhaft, wenn die Verbindungsstrebe im wesentlichen den Konturen des Fahrzeugbodens folgt.

Zu einer weiteren Verbesserung der Steifigkeit bei Seitenkollision führt es auch, wenn die vertikalen Stützen des Hauptrahmens in ihrem unteren Bereich durch eine weitere Querverstrebung verbunden sind.

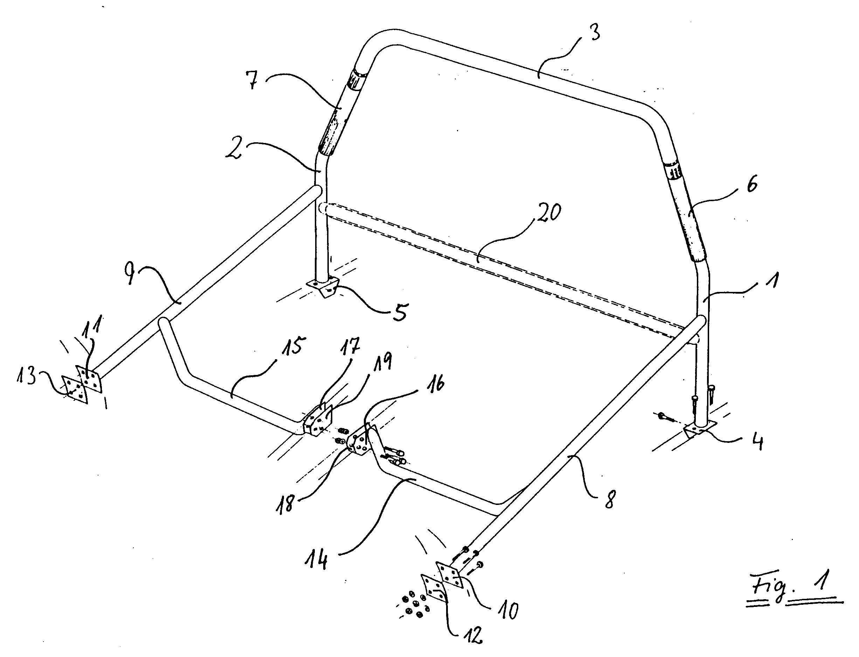

Weitere Merkmale und Vorteile der Erfindung ergeben sich aus der nachfolgenden Beschreibung eines Ausführungsbeispieles. Dabei zeigt
- Fig. 1: eine erfindungsgemäße Überrollvorrichtung.

Die erfindungsgemäße Überrollvorrichtung weist einen Hauptrahmen auf, der aus zwei vertikalen Stützen 1, 2 sowie aus einem diese unter dem Fahrzeugdach verbindende Querstrebe 3 besteht.

Die vertikalen Stützen 1, 2, die üblicherweise im Bereich der den Rücklehnen der Vordersitze naheliegenden Türsäulen (B-Säulen) angeordnet sind, werden an ihrem unteren Ende über Befestigungswinkel 4, 5 mit dem Fahrzeugrahmen fest verbunden. Dies kann sowohl mittels Schrauben erfolgen, als auch durch Schweißungen.

Es ist weiterhin denkbar, diese Stützen mit den ungefähr in Schulterhöhe an den B-Säulen befindlichen Sicherheitsgurtaufhängungspunkten zu verschrauben.

Um die Verletzungsgefahr zu verringern, sind die vertikalen Stützen teilweise mit Polstern 6, 7 abgedeckt.
In ihrem unteren Bereich sind an den vertikalen Stützen 1, 2 Längsstreben 8, 9 befestigt, die vor dem Bereich der Vordersitze enden. Im dargestellten Beispiel weisen sie an ihrem vorderen Ende Befestigungsplatten 10, 11 auf, mit denen sie an den inneren Radhäusern befestigt werden können. Werden wie im dargestellten Beispiel für diese Befestigungen Verschraubungen vorgesehen, so können Verstärkungsplatten 12, 13 von der anderen Seite des Karosseriebleches dagegengeschraubt werden.

In dem vor dem Bereich der Vordersitze liegenden Abschnitt sind die Längsstreben 8, 9 mit Verbindungsstreben 14, 15 verbunden, die zur Fahrzeugmitte hinlaufen und dort am (nicht dargestellten) Kardantunnel verschraubt werden.

Hierzu weisen sie an ihrem am Kardantunnel liegenden Ende Befestigungslaschen 16, 17 auf. Dabei kann die Stelle, an die sie geschraubt werden, mit Verstärkungslaschen 18, 19 unterlegt werden.

Es ist auch möglich, die Verbindungsstreben 14, 15 als eine durchgehende Verbindungsstrebe auszubilden. Diese würde sich ebenso wie die Verbindungsstreben 14, 15 in ihrer Form an den Boden des Fahrzeuges anpassen, um den Bewegungsbereich von Fahrer und Beifahrer möglichst wenig einzuschränken.

Um die Steifigkeit der dargestellten Überrollvorrichtung in Querrichtung weiter zu erhöhen, weist die dargestellte Überrollvorrichtung zwischen den vertikalen Stützen 1, 2 eine Querverstrebung 20 auf.
Alle Verbindungen zwischen den erwähnten Einzelteilen können durch Verschweißen, durch Verschrauben oder durch speziell gestaltete Muffen gebildet werden.

Zusammenfassend bietet die erfindungsgemäße Überrollvorrichtung den Vorteil, daß sie nach außen kaum sichtbar ist, den Insassen jedoch gerade bei Seitenaufprallunfällen größtmögliche Sicherheit gibt.

## Patentansprüche

1. Überrollvorrichtung für Personenkraftfahrzeuge mit wenigstens einem Vordersitz, mit einem Hauptrahmen, der aus zwei im Bereich der den Rücklehnen der Vordersitze naheliegenden Türsäulen zugeordneten und fest mit der Fahrzeugkarosserie verbundenen vertikalen Stützen (1, 2) und einer diese unter dem Fahrzeugdach verbindenden Querstrebe (3) besteht, und mit an den vertikalen Stützen des Hauptrahmens in deren unterem Bereich befestigten, parallel zur Fahrtrichtung nach vorne verlaufenden Längsstreben (8, 9), die vor dem Bereich der Vordersitze enden,
dadurch gekennzeichnet,
daß die Längsstreben (8, 9) in dem vor dem Bereich der Vordersitze liegenden Abschnitt mit einem Ende einer quer zur Fahrzeuglängsachse und zur Mittelebene des Fahrzeugs hinlaufenden Verbindungsstrebe (14, 15) verbunden sind.

2. Vorrichtung gemäß Anspruch 1,
dadurch gekennzeichnet,
daß die Verbindungsstrebe (14, 15) entlang der vorderen Grenze des Längsverstellbarkeitsbereiches der Vordersitze verläuft.

3. Vorrichtung gemäß Anspruch 1,
dadurch gekennzeichnet,
daß die Längsstreben (8, 9) nach vorne bis zu den inneren Radhäusern verlaufen und dort mit der Fahrzeugkarosserie verbunden sind.

4. Vorrichtung gemäß Anspruch 1,
dadurch gekennzeichnet,
daß die Längsstreben (8, 9) nach vorne bis zu den vorderen Federbeindomen verlaufen und dort mit der Fahrzeugkarosserie verbunden sind.

5. Vorrichtung gemäß Anspruch 1,
dadurch gekennzeichnet,
daß die Verbindungsstrebe (14, 15) an ihrem anderen Ende (16, 17) fest mit dem entlang der Fahrzeugmitte verlaufenden Kardantunnel verbunden ist.

6. Vorrichtung gemäß Anspruch 1,
dadurch gekennzeichnet,
daß die Verbindungsstrebe an ihrem anderen Ende mit der auf der anderen Fahrzeugseite liegenden Längsstrebe verbunden ist.

7. Vorrichtung gemäß Anspruch 1,
dadurch gekennzeichnet,
daß die Verbindungsstrebe (14, 15) im wesentlichen den Konturen des Fahrzeugbodens folgt.

8. Vorrichtung gemäß Anspruch 1,
dadurch gekennzeichnet,
daß die vertikalen Stützen (1, 2) in ihrem unteren Bereich durch eine weitere Querverstrebung (20) verbunden sind.

## Claims

1. A roll bar device for motor cars with at least one front seat, with a main frame which consists of two vertical supports (1, 2) associated with door posts disposed adjacent the back rest of the front seat and rigidly connected with the vehicle chassis and of a transverse strut (3) connecting them under the roof of the vehicle, and with longitudinal bars (8, 9) terminating before the one of the front seat which are connected to the lower region of the vertical supports of the main frame which extend forwardly in parallel with the direction of travel,
characterised in that
the section of the longitudinal struts (8, 9) lying in front of the front seat are connected at one end with connection struts (14, 15) extending transversely to the longitudinal axis of the vehicle to the central plane of the vehicle.

2. A device according to claim 1,
characterised in that
the connecting strut (14, 15) extends along the front boundary of the range of longitudinal adjustability of the front seat.

3. A device according to claim 1,
characterised in that
the longitudinal struts (8, 9) extend forwardly to the inner wheel arches and are there connected to the chassis of the vehicle.

4. A device according to claim 1,
characterised in that
the longitudinal struts (8, 9) extend forwardly to the shock absorber domes and are there connected to the chassis of the vehicle.

5. A device according to claim 1,
characterised in that
at its other end (16, 17) the connecting strut (14, 15) is rigidly connected to the transmission tunnel running along the centre of the vehicle.

6. A device according to claim 1,
characterised in that
at its other end the connecting strut is connected with the longitudinal strut lying on the other side of the vehicle.

7. A device according to claim 1,
characterised in that
the connecting strut (14, 15) essentially follows the contours of the floor pan of the vehicle.

8. A device according to claim 1,
characterised in that
the vertical supports (1, 2) are connected together at their lower regions by a further transverse strut (20).

## Revendications

1. Dispositif de protection en cas de capotage pour voitures de tourisme, comportant au moins un siège avant, un cadre principal, qui est constitué de deux supports verticaux (1,2), qui sont associés dans la zone des montants de portes proches du dossier des sièges avant et sont reliés de façon fixe à la carrosserie du véhicule, et d'une barre transversale (3) qui relie ces supports au-dessous du toit du véhicule, et comportant des barres longitudinales (8,9), qui sont fixées aux support verticaux du cadre principal, au niveau de leur partie inférieure, s étendent vers l'avant parallèlement à la direction de déplacement et se terminent en avant de la zone des sièges avant, caractérisé en ce que les barres longitudinales (8,9) sont reliées, dans la section située en avant de la zone des sièges avant, à une extrémité d'une barre de liaison (14,15) qui s'étend transversalement par rapport à l'axe longitudinal du véhicule en direction du plan médian du véhicule.

2. Dispositif selon la revendication 1, caractérisé en ce que la barre de liaison (14,15) s'étend le long de la limite avant de la gamme de possibilité de réglage longitudinal des sièges avant.

3. Dispositif selon la revendication 1, caractérisé en ce que les barres longitudinales (8,9) s étendent vers l'avant jusqu'aux passages intérieurs de roues et y sont reliées à la carrosserie du véhicule.

4. Dispositif selon la revendication 1, caractérisé en ce que les barres longitudinales (8,9) s'étendent vers l'avant jusqu'aux dômes avant des jambes de suspension et sont reliées à la carrosserie du véhicule.

5. Dispositif selon la revendication 1, caractérisé en ce que la barre de liaison (14,15) est reliée de façon fixe, par son autre extrémité (16,17), au tunnel de transmission, qui s'étend au centre du véhicule.

6. Dispositif selon la revendication 1, caractérisé en ce que la barre de liaison est reliée, au niveau de son autre extrémité, à la barre longitudinale située sur l'autre côté du véhicule.

7. Dispositif selon la revendication 1, caractérisé en ce que la barre de liaison (14,15) suit essentiellement les contours du plancher du véhicule.

8. Dispositif selon la revendication 1, caractérisé en ce que les supports verticaux (1,2) sont reliés, dans leur partie inférieure, par une autre barre transversale (20).
